# DEMANDE DE BREVET EUROPEEN

(11) **EP 0 969 265 A1**
(43) Date de publication de la demande: **05.01.2000**
(21) Numéro de dépôt: 99401616.0
(22) Date de dépôt: 29.06.1999
(51) Int. Cl.: G01B 7/16, G01B 5/30, G01B 5/00

(54) **Capteur de détection des contraintes mécaniques dans un support, notamment pour engins de levage**

(30) Priorité: 30.06.1998 FR 9808276
(71) Demandeur: G'Tel, 45190 Beaugency (FR)
(72) Inventeur: Lambert, Francis, 45530 Sury-aux-Bois (FR)
(74) Mandataire: Thibon-Littaye, Annick

(57) **Abrégé**

Ce capteur (10) est du type comportant une partie sensible portant au moins une jauge de contrainte (41), dans une structure de montage du capteur sur un support, tel qu'un élément de bâti d'un engin de levage. Suivant l'invention, ladite structure comporte quatre pièces de structure enserrant deux par deux (31-32 et 33-34) entre elles respectivement deux parties latérales (22 et 23) d'un corps d'épreuve (20) dont une partie centrale comprise entre lesdites parties latérales (22, 23) constitue ladite partie sensible (21), de manière à transmettre tous les efforts mécaniques subis par le support vers ladite partie sensible. L'ensemble se monte avantageusement sur le support par l'intermédiaire d'organes d'assemblage à orientation libre (61-64) au niveau de chaque couple de pièces de structure.

## Description

La présente invention concerne la conception et la réalisation de capteurs à une ou, le plus souvent, plusieurs jauges de contrainte, du type de ceux qui sont utilisés couramment dans les systèmes de sécurité des engins de levage, ou qui, d'une manière plus générale, sont destinés à être montés sur tout support dans lequel il s'agit de détecter des contraintes mécaniques.

On conçoit aisément que les questions de sécurité sont essentielles pendant le fonctionnement des engins de levage, dont font partie notamment les grues que les ouvriers du domaine du bâtiment et des travaux publics utilisent pour travailler en hauteur, à partir d'une nacelle d'où s'effectue le pilotage du déplacement des bras de la grue et du chariot qui la porte mobile sur le sol.

Le rôle des capteurs que l'on place, soit sur un bras déployable ou en particulier sur la flèche d'une grue, soit sur la paroi de sa nacelle, soit encore sur tout élément du bâti d'un engin de levage, est alors de détecter toute surcharge entraînant une contrainte mécanique dépassant un seuil de sécurité prédéterminé. A partir d'un signal émis par le capteur en conséquence d'une telle détection, un système électronique approprié peut commander des mécanismes d'alerte ou verrouiller des commandes de fonctionnement. Et bien entendu, le cas des grues n'est pris ici que pour exemple de l'ensemble des engins de levage.

Or, on a pu constater à l'usage que les capteurs actuellement connus sont très insuffisants pour satisfaire à ces besoins de sécurité. Ils montrent des défaillances telles que, plutôt que de les faire réparer ou changer chaque fois qu'il est constaté une anomalie de fonctionnement, les ouvriers utilisant les engins de levage en viennent à les déconnecter des systèmes de sécurité exploitant leurs signaux, et donc à mettre ces derniers hors circuit, malgré le danger que cela représente.

Les capteurs à jauges de contrainte que l'on connaît dans d'autres applications, tels que ceux que décrivent les documents de brevet US 3 780 817 ou EP 0548927, ne permettent pas de résoudre les problèmes qui se posent ici.

Ces documents décrivent certes des capteurs à jauges de contrainte, en expliquant comment les résistances électriques des jauges sont montées dans un pont de Wheatstone pour cumuler l'effet de deux jauges en opposition et fournir un signal de tension traduisant la déformation de l'élément sensible formant le support des jauges. Mais il s'agit exclusivement de capteurs de forces qui ont pour effet de fournir une mesure de poids et qui pour cela sont sensibles à la seule déformation par flexion du support. Le montage de l'élément sensible portant les jauges s'effectue alors par l'intermédiaire d'éléments eux-mêmes flexibles qui le relient au support de manière à amplifier la déformation du support.

La fragilité inhérente aux capteurs de ce genre les rend impropres à être utilisés dans les conditions visées par l'invention. Non seulement, on souhaite pouvoir détecter les surcharges de toutes sortes, quel que soit le sens des efforts subis par le support, mais en outre les efforts mécaniques à détecter doivent être transmis fidèlement jusqu'à l'élément sensible et, de plus, ce dernier doit être convenablement protégé dans l'ensemble du capteur, lequel doit être solide et fournir des résultats sans dérive.

Pour satisfaire aux diverses exigences de la pratique industrielle, dont principalement celles qui viennent d'être rappelées, la présente invention prévoit de constituer la partie sensible aux contraintes mécaniques dans un corps d'épreuve constitué par une pièce distincte d'autres pièces, dites ici de structure, qui assurent la rigidité de l'ensemble dans le montage du capteur sur son support, ainsi que la transmission efficace des contraintes à détecter sélectivement vers la partie sensible du corps d'épreuve, qui porte la ou les jauges de contraintes.

De ce fait, le corps d'épreuve peut être réalisé à partir d'une masse de forme simple venue d'usine, facile à tailler ou conformer. Il en est de même des pièces de structure. Ces dernières sont avantageusement faites de blocs massifs sans relation aucune avec la forme ou les dimensions du corps d'épreuve.

Il n'est donc plus besoin de se soucier que le matériau de l'ensemble de la structure soit aisément usinable. Ce matériau peut être librement choisi aussi proche que possible de celui du support pour assurer une bonne homogénéité dans toutes les déformations dues à des efforts subis par le support, y compris notamment en évitant l'incidence qu'auraient des coefficients de dilatation thermique différents.

Ainsi, l'invention a principalement pour objet un capteur de détection des contraintes mécaniques dans un support, comportant une partie sensible portant au moins une jauge de contrainte, intégrée dans une structure de montage du capteur sur ledit support, caractérisé en ce que ladite structure comporte quatre pièces de structure massives enserrant deux par deux solidement entre elles respectivement deux parties latérales d'un corps d'épreuve dont une partie centrale comprise entre lesdites parties latérales constitue ladite partie sensible, lesdites parties latérales et lesdites pièces de structure formant ainsi un ensemble rigide de transmission des efforts mécaniques subis par le support vers ladite partie sensible. .

Conformément à un mode de réalisation préféré du capteur selon l'invention, le corps d'épreuve est constitué par une plaque en lame de forme allongée et relativement mince, dans laquelle du moins les parties latérales encadrant la partie centrale (si ce n'est même également cette dernière) présentent deux faces opposées planes, à surface lisse, se situant avantageusement dans des plans respectifs parallèles entre eux. De la sorte, les deux parties latérales d'une telle plaque sont particulièrement bien appropriées pour être enserrées chacune entre deux pièces de structure d'épaisseur relativement importante et à surface plane et lisse complémentaire les maintenant fermement.

Au plus simple, chacune des pièces de structure est donc réalisée sous la forme d'un bloc parallélépipédique massif, et ces pièces sont solidarisées avec le corps d'épreuve, en contact mécanique intime avec les faces opposées correspondantes de ses parties latérales, par des moyens en eux-mêmes classiques. De ce point de vue, il est apparu particulièrement efficace en conformité avec les objectifs de l'invention, de combiner des organes de solidarisation mécanique en direction transversale aux surfaces lisses coopérantes avec une couche intermédiaire de collage entre ces dernières.

Au niveau des parties latérales du corps d'épreuve enserrées entre les pièces de structure, l'ensemble est avantageusement percé d'alésages réalisés par avance, destinés au passage d'organes de montage du capteur sur son support, lequel s'effectue en général au moyen de vis ou boulons usuels, avec interposition de cales d'épaisseur venant s'ajouter aux pièces du capteur proprement dit.

D'autre part, la partie centrale du corps d'épreuve, qui reste libre dans sa configuration par rapport aux pièces de structure, est avantageusement enrobée, d'une manière qui est d'ailleurs en elle-même classique, dans une masse de matière à comportement élastique, qui protège les jauges de contrainte des agressions extérieures sans perturber les indications qu'elles fournissent en fonctionnement. Dans les modes de réalisation préférés du capteur de l'invention, en liaison notamment avec les applications dans le domaine des engins de levage, l'enrobage élastique se prolonge de chaque côté de la partie sensible en enveloppant une zone proximale des pièces de structure sur tout leur pourtour (sans atteindre les alésages de passage de vis ou boulons de fixation au support), et cet enrobage élastique est lui-même entouré d'un fourreau d'acier ou autre enveloppe de protection mécanique.

Conformément à d'autres caractéristiques secondaires de l'invention, le capteur ainsi conçu s'adapte à de multiples modes de fonctionnement, en fonction du nombre des jauges de contrainte que porte sa partie sensible constituée en partie centrale du corps d'épreuve et de la manière dont ces jauges sont connectées en montage électrique dans un pont de mesure.

On citera ici à titre d'exemple un premier mode de réalisation concernant un capteur dans lequel la partie sensible est normalement, au repos en l'absence d'efforts subis par le support, dans le même plan que ses parties latérales. Dans ce cas, le capteur fonctionnant en traction, éventuellement dans les deux directions longitudinale et transversale du plan du corps d'épreuve, il est adapté pour détecter les contraintes résultant d'efforts de flexion et/ou de torsion s'exerçant sur le support correspondant.

Toutefois, en plus des modes de fonctionnement qui sont proposés pour des capteurs de l'art antérieur, la présente invention permet de mettre à profit la liberté qu'elle entraîne dans la configuration spatiale de la partie sensible du capteur.

Elle se traduit alors par des modes de réalisation qui exploitent le fait qu'elle autorise un fonctionnement en flambage du corps d'épreuve en sa partie centrale indépendamment de ses parties latérales et des pièces de structure, pour obtenir un capteur sensible aux contraintes apparaissant dans un support travaillant en compression. En particulier, un capteur suivant l'invention à quatre jauges de contrainte, réparties entre les deux faces opposées d'une partie centrale du corps d'épreuve présentant d'origine, en position de repos, une flèche prédéterminée par rapport aux parties latérales, pourra fournir un signal cumulant leurs indications de contraintes de traction et de contraintes de compression dans la fonction de sortie d'un pont de Wheatstone.

D'autres caractéristiques de l'invention, qui seront avantageuses en pratique industrielle, dans toute combinaison techniquement opérante avec les précédentes, concernent le mode de montage du capteur sur son support. En effet, à partir du moment où, suivant les caractéristiques ci-dessus de l'invention, on dispose d'un capteur apte à présenter une sensibilité à la fois durable et bien supérieure à celle des capteurs antérieurs, on a été amené à concevoir son montage sur le support de manière à tirer au mieux profit de ces avantages.

Suivant l'invention, on prévoit avantageusement de fixer l'ensemble du corps d'épreuve et des pièces de structure du capteur à son support par un dispositif d'assemblage à effet de rotule, c'est-à-dire procurant une liberté d'orientation dans toutes les directions de l'espace. Cet effet peut s'obtenir notamment au moyen de surfaces courbes complémentaires, en général sphériques, qui sont libres de glisser l'une sur l'autre, et ce préférentiellement en répartition sur les deux faces opposées du corps d'épreuve considéré symétriquement en chacune de ses deux parties latérales.

Grâce à l'effet de rotule ainsi obtenu, le capteur se monte pour suivre sélectivement les efforts mécaniques auxquels il doit être sensible, sans avoir à subir des tensions initiales telles que celles qui pourraient être dues à des défauts de planéité de surface des supports. En particulier, pour les engins de levage dont il s'agit ici plus particulièrement, bien que non limitativement, les éléments de bâti constituant le support du capteur risquent toujours d'être déformés localement, principalement soit dans le sens d'un biais qui se traduirait sur le capteur comme un effort de flexion, soit dans le sens d'une surface gauche ou en vrille résultant sur le capteur en un effort de torsion. L'invention permet donc d'éviter ce genre de conséquences.

Par ses différentes caractéristiques, telles qu'elles ont été ci-avant ou qu'elles seront plus loin définies, décrites et illustrées, et telles qu'elles peuvent être avantageusement appliquées dans la pratique industrielle, l'invention permet donc notamment, par rapport à l'art antérieur accessible à l'homme de métier sans oeuvre inventive, d'une part d'améliorer les performances telles que celles qui sont souhaitables pour déclencher automatiquement des interventions de sécurité, d'autre part de diversifier les conditions de fonctionnement utiles aux différentes applications dans le monde industriel.

L'invention sera maintenant plus complètement décrite dans le cadre de caractéristiques préférées et de leurs avantages, telles qu'elles ressortent des figures des dessins annexés, dans lesquels :
- la figure 1 représente en section transversale un capteur réalisé suivant l'invention et fixé sur un support dont il s'agit de détecter les contraintes subies en flexion et en torsion ;
- la figure 2 représente schématiquement ce même capteur en tous les éléments constituant le capteur proprement dit ;
- la figure 3 est une vue de dessus du capteur de la figure 2 représenté avant enrobage de sa partie sensible ;
- la figure 4 représente, d'une manière encore plus schématique, une variante du capteur suivant l'invention, destinée plutôt à détecter des efforts de compression ;
- la figure 5 concerne le capteur de la figure 4, dont elle montre le seul corps d'épreuve en vue de dessus ;
- et la figure 6 montre un mode de réalisation suivant l'invention illustrant une variante de la figure 2 en ce qui concerne le montage du capteur en orientation libre sur son support d'utilisation.

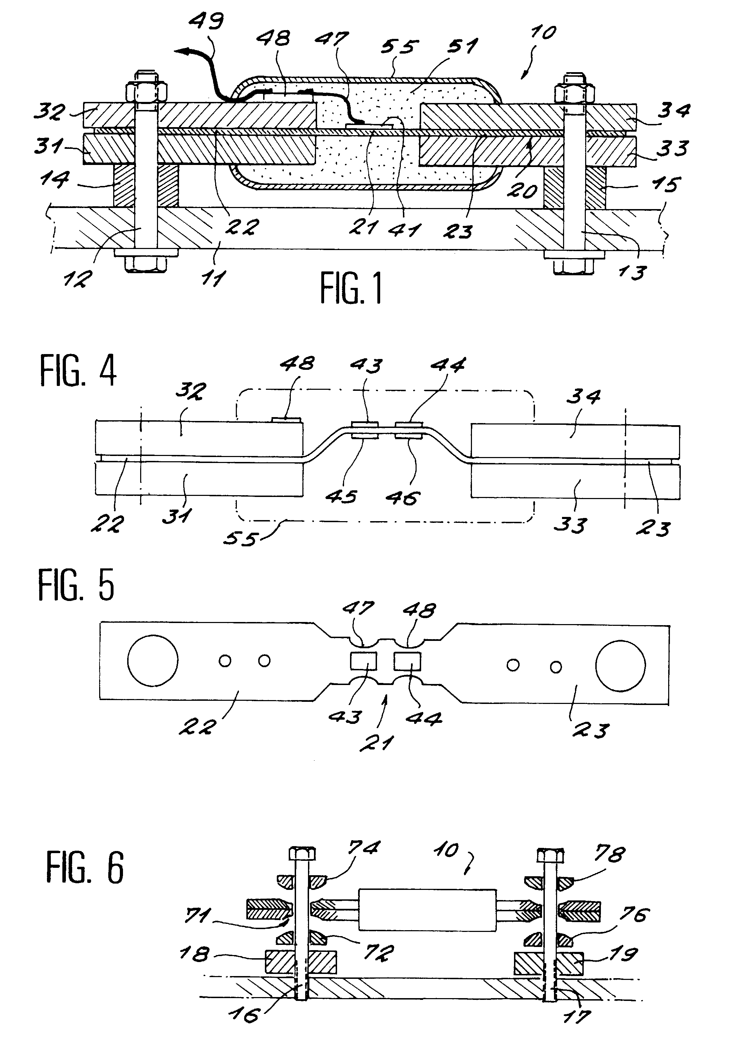

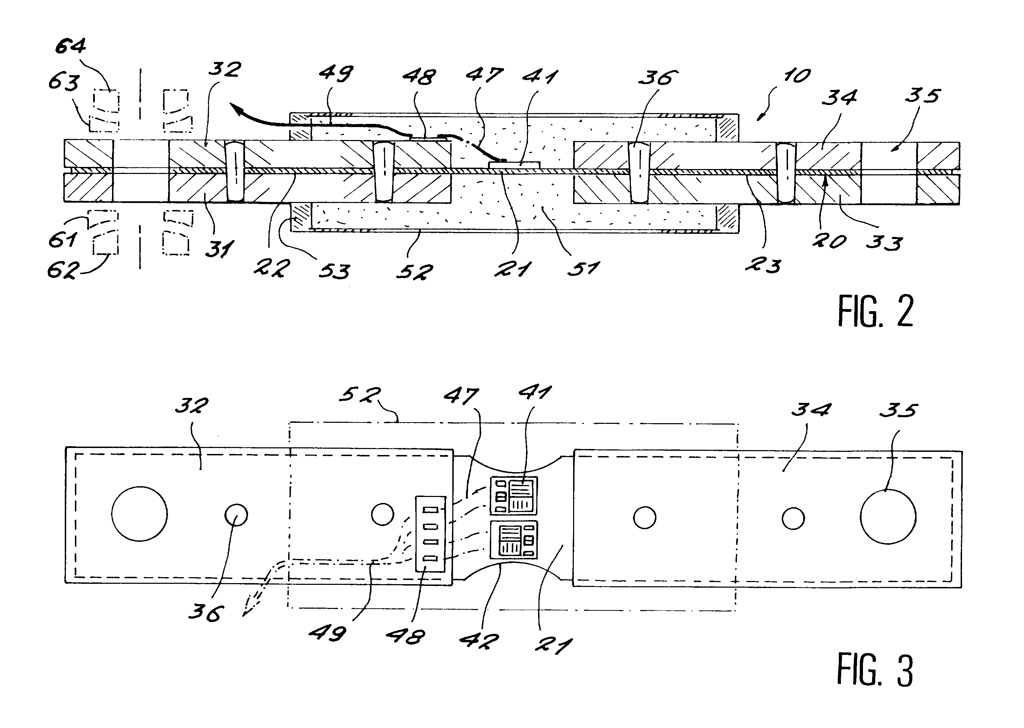

La figure 1 représente un capteur 10 suivant l'invention tel qu'il peut être monté sur un support 11, d'une manière en elle-même classique, au moyen de boulons 12 et 13. En admettant que le support 11 soit, par exemple, un élément de bâti de flèche de grue ou d'un autre type de bras d'engin de levage, toutes les pièces constitutives sont en un matériau présentant un comportement mécanique homogène avec celui du support, donc ici en acier inoxydable, à la seule exception d'un enrobage à comportement élastique dont il sera plus complètement question par la suite.

On observe de la figure 1 que le capteur 10 se dispose en pratique à distance du support, grâce à des entretoises 14 et 15 qui sont intercalées entre le support 11 et le capteur 10 et qui forment, autour des boulons 12 et 13, des cales d'épaisseur préservant la rigidité de l'assemblage pour transmission des contraintes mécaniques à détecter.

La constitution du capteur proprement dit ressort de cette figure 1 ainsi que des figures 2 et 3. On y voit qu'au lieu d'être constitué par usinage dans une masse métallique unique, qui de ce fait n'était pas d'une même qualité d'acier que le support dans les fabrications actuellement connues, le corps métallique du capteur 10 est obtenu par assemblage rigide de cinq pièces différentes, qui peuvent être fabriquées et usinées séparément.

Il s'agit d'une plaque centrale relativement mince et allongée, que l'on appellera ici le corps d'épreuve, et de quatre pièces, dites de structure, sensiblement de même largeur mais plus courtes et plus épaisses, qui conjuguent leurs effets deux à deux pour enserrer le corps d'épreuve respectivement des deux côtés de sa longueur. A titre d'exemple, l'épaisseur du corps d'épreuve est de 0,5 mm et celle de chaque pièce de structure de 5 millimètres.

Le corps d'épreuve 20 est réalisé essentiellement sous la forme d'une lame parallélépipédique. En effet, dans le mode de réalisation suivant l'invention des figures 2 et 3, il est montré non seulement d'épaisseur faible constante, mais également en forme plane sur toute sa longueur. Il présente donc deux faces principales opposées qui sont parallèles entre elles, et toutes deux à surface lisse, à savoir une face supérieure et une face inférieure dans la disposition représentée sur les figures.

Dans le sens de la longueur, on y distingue une partie centrale 21, qui constitue essentiellement la partie sensible du capteur. Elle porte donc une jauge de contrainte 41, représentée sur la figure 2 en face supérieure du corps d'épreuve 20.

La vue de dessus de la figure 3 montre qu'il s'agit en réalité, dans l'exemple considéré, de deux couples de jauges de contrainte 41 et 42, qui sont plaquées côte-à-côte et orientées dans deux directions perpendiculaires, respectivement dans le sens de la longueur et dans le sens de la largeur du corps d'épreuve. De la sorte, le capteur considéré est construit pour être sensible aux contraintes résultant d'efforts de flexion et d'efforts de torsion s'exerçant dans le support, en travaillant en extension suivant les efforts de traction qui lui sont transmis respectivement en direction longitudinale et en direction transversale de son plan au repos.

La figure 3 montre également que le corps d'épreuve est rétréci au niveau de cette partie centrale sensible, par des échancrures courbes de chaque côté du corps d'épreuve 20, lequel est pour le reste de largeur constante. Cette disposition permet de concentrer encore mieux la distorsion mécanique vers les jauges de contrainte.

Du point de vue électrique, les jauges de contrainte, telles qu'elles sont visibles sur le figure 3, constituent quatre grilles montées en rosette à 90 degrés. Il ressort à l'évidence de cette figure que chaque grille y est constituée, d'une manière en soi classique, par un circuit imprimé analogue à un fil conducteur électriquement résistant, rebouclé en plusieurs brins parallèles, comme dans ce qu'il est convenu d'appeler des jauges de Kelvin.

On sait que la capacité qu'ont les jauges de ce genre à détecter des contraintes se traduisant par une déformation du corps d'épreuve, vient d'une variation de la résistance électrique du fil en fonction de ses variations de longueur. L'exploitation des signaux obtenus est également en elle-même classique. Elle passe par différentes formes de montage des grilles conductrices pour former les bras d'un pont de mesure tel un pont de Wheatstone.

Les connexions électriques avec des circuits extérieurs d'amplification et d'analyse des signaux émanant du capteur en variations de différence de potentiel sont assurées à partir des jauges par des fils conducteurs 47 au moyen desquels les entrées et sorties de chaque jauge sont regroupées sur quatre cosses de relais ménagées sur une plaque de connecteurs 48, d'où repartent des fils conducteurs 49 conduisant les signaux jusqu'à une armoire de contrôle non représentée, en général située dans le poste de pilotage de l'engin de levage dont il s'agit d'assurer la sécurité en cas de surcharge.

Comme il ressort plus particulièrement de la figure 2, mais aussi de la figure 3, les quatre plaques pièces de structure sont identiques entre elles. On les trouve en deux paires, référencées respectivement 31 et 32 d'une part, 33 et 34 de l'autre, symétriquement par rapport au plan médian du corps d'épreuve passant par les jauges de contrainte. Les deux pièces de chaque paire sont disposées symétriquement de part et d'autre de la partie latérale correspondante, 22 ou 23, du corps d'épreuve. Elles laissent dégagée la partie centrale, ou partie sensible, 21, du corps d'épreuve 20.

Chacune des pièces de structure est réalisée sous la forme d'un bloc massif en parallélépipède rectangle. Aux moins leurs faces longitudinales internes présentent une surface bien plane, homogène et lisse. C'est elles qui coopèrent avec le corps d'épreuve, en venant en appui au contact des faces complémentaires de ce dernier en ses parties latérales. La qualité du contact mécanique est améliorée par une couche de collage intermédiaire, qui a en plus pour rôle de parfaire l'assemblage en un ensemble solidaire. Il importe, en effet, d'éviter tout risque de glissement d'une pièce sur l'autre et l'apparition d'efforts de cisaillement perturbateurs des mesures.

Pour l'essentiel, l'assemblage rigide en un ensemble solidaire est assuré par des organes mécaniques agissant en direction transversale aux surfaces coopérantes en contact, à travers les parties latérales 22 et 23 du corps d'épreuve et les pièces de structure qui les enserrent par paires 32-32 et 33-34 respectivement. Ces organes de solidarisation sont matérialisés ici sous la forme de goupilles 36.

Les différentes pièces de l'ensemble sont donc percées par avance d'orifices appropriés pour recevoir les goupilles 36, ainsi que d'alésages 35 qui se correspondent en section de manière à pouvoir servir au passage des boulons 12 et 13 lors de la fixation du capteur sur son support d'utilisation.

Pour tous les éléments métalliques qui viennent d'être décrits, le matériau utilisé est un alliage d'acier inoxydable à faible hystérésis, faible fluage et faible relaxation, dont les propriétés métallurgiques sont proches de l'acier à ressorts de haute précision.

Toujours en ce qui concerne le capteur proprement dit, les figures 1 et 2 montrent comment la partie sensible est isolée des agressions extérieures (projections d'eau, humidité, solutions acides), ce sans perturber le fonctionnement des jauges de contrainte. En pratique, toute la partie centrale du corps d'épreuve est enveloppée par une masse d'enrobage 51. Celle-ci est constituée en une matière souple, à comportement élastique, généralement en plusieurs couches à base d'élastomères (latex de silicones par exemple), qui est mise en oeuvre sur place, par dessus un revêtement superficiel et un film d'étanchéité. Elle est elle-même enfermée dans une enveloppe de protection mécanique, réalisée sous la forme d'un fourreau d'acier 52 qui l'entoure (figure 2) ou d'un carter 55 (figure 1).

La masse d'enrobage 51 ne recouvre pas seulement la partie centrale 21 du corps d'épreuve 20. Elle se prolonge de chaque côté en recouvrant également les pièces de structure 31 et 32 sur toute leur surface extérieure. Dans le sens longitudinal, c'est seulement une zone proximale de chaque pièce qui est ainsi enrobée, s'étendant sur à peu près la moitié de sa longueur totale, de telle sorte que les alésages 35 restent accessibles. Enfin, quand l'enveloppe mécanique n'est pas soudée sur les pièces de structure, elle est du moins fermée par des bouchons de matière plastique visibles en 53 (figure 2).

Du point de vue des dimensions, on peut citer à titre d'exemple les suivantes :
- Epaisseur du corps d'épreuve : 0,5 mm,
- Epaisseur de chaque pièce de structure : 5 mm,
- Largeur commune des cinq pièces : 2 cm,
- Longueur totale : 20 cm,
- Longueur de chaque pièce de structure : 5 mm,
- Partie centrale du corps d'épreuve rétrécie à 2 cm,
- Diamètre des alésages 35 : 10 mm,
- Fourreau : de section rectangulaire 2,5 cm x 3 cm.

Au capteur 10 constitué comme il vient d'être décrit, il est associé des moyens de montage par assemblage avec le support 11 qui assurent la transmission des efforts mécaniques à déterminer jusqu'au corps d'épreuve tout en autorisant un réglage de position relative en orientation libre dans toutes les directions de l'espace. Tel n'est toutefois pas le cas dans le mode de réalisation illustré par la figure 1, mais bien celui des modes de réalisation illustrés en deux variantes par les figures 2 et 6.

Dans tous ces exemples, on retrouve que le système de montage est symétrique entre les deux extrémités du capteur, et qu'il comporte des boulons de fixation 12 et 13 dont on a déjà parlé, plus des entretoises référencées 14 et 15 sur la figure 1, ou 18 et 19 sur la figure 6. Ces entretoises sont illustrées par des rondelles annulaires cylindriques s'interposant entre le capteur et son support. Leur propos est de permettre en quelque sorte un réglage d'assiette, en adaptant leurs épaisseurs respectives de manière à placer le capteur généralement parallèle à un élément de bâti métallique formant le support. Elles absorbent ainsi des défauts de planéité du support quand ceux-ci sont déterminés préalablement au montage du capteur et considérés suivant la ligne moyenne en direction longitudinale.

Les moyens d'assemblage en rotation libre qui les complètent se disposent également symétriquement par rapport à la partie sensible du corps d'épreuve. Ils apportent un effet de rotule d'articulation s'exerçant au montage au niveau de chacun des boulons de fixation traversant les pièces de structure. Ils comportent dans ce but des surfaces courbes complémentaires qui sont libres de glisser l'une sur l'autre. En outre, dans les deux variantes de réalisation illustrant l'invention sur les figures, la disposition de ces surfaces répartit tant l'effet de rotule que la pression de fixation, à chacune des extrémités du corps d'épreuve, de manière équilibrée de part et d'autre de lui, donc entre ses deux faces opposées.

Pour la réalisation de la figure 2, on a ainsi fait apparaître, en considérant le boulon de fixation venant à gauche de la figure, un ensemble de quatre rondelles s'empilant autour du boulon. Un premier couple de deux rondelles 61 et 62 s'interpose entre la rondelle formant cale d'épaisseur (le cas échéant le support lui-même) et la pièce de structure 31 située sur cette face du capteur. Un second couple se compose de deux rondelles 63 et 64, qui sont analogues si ce n'est identiques aux précédentes. Par contre, elles se disposent entre la pièce de structure 32 et la tête du boulon.

Dans chacun des couples, les deux rondelles sont mutuellement en appui glissant par des surfaces courbes complémentaires, qui plus exactement sont ici des surfaces sphériques centrées sur l'axe du boulon, l'une étant concave et l'autre convexe. Et comme on l'a déjà exprimé, la rondelle 62 peut venir directement en appui sur le support par sa face plane.

Si l'on passe maintenant à la variante de la figure 6, on peut observer de celle-ci que les rondelles 61 et 63 de la figure 2 sont supprimées. La surface courbe concave est ménagée en creux autour de l'alésage de passage de l'organe de fixation, dans l'épaisseur de la pièce de structure, par exemple comme il est représenté en 71 pour la pièce inférieure de gauche. L'assemblage se fait donc, de chaque côté du capteur, par l'intermédiaire de deux rondelles à face convexe, qui portent respectivement les références 72 et 74 en complément d'une entretoise 18 d'un côté, et les références 76 et 78 en complément d'une entretoise 19 de l'autre.

Sur la même figure, on remarque en outre que les deux organes de fixation ne sont plus des boulons à proprement parler, mais des vis 16 et 17, dont les têtes respectives prennent appui sur la face plane des rondelles 74 et 78 quand on les visse dans le support.

La description qui précède explique clairement comment l'invention permet d'atteindre les objectifs qu'elle s'est fixés.

En particulier, le système de montage préconisé permet de compenser tous les défauts de planéité aux différents points d'appui. Il en résulte que l'on évite la fragilisation du capteur lors de son montage, compte tenu des forts couples de serrage imposés en pratique pour la fixation. De fait, on n'a plus à craindre qu'un support présentant localement une aspérité en biais ou une surface gauche engendre dans le capteur des contraintes mécaniques avant même que ce capteur reçoive les efforts subis par le support qu'il convient de détecter et mesurer. Ceci est d'autant plus important que, dans des situations où l'on sait que la planéité des supports n'est jamais parfaite, les capteurs doivent pouvoir être fabriqués industriellement, sous des modèles capables de s'adapter sur des supports divers, ne serait-ce qu'en se limitant à des supports de même nature dans le cadre d'une application déterminée.

On comprend également que le mode de construction du capteur, allié au choix des matériaux, conduise à une grande sensibilité, tout en permettant d'augmenter considérablement la fiabilité du capteur, à la fois en précision et en stabilité pour une durée de vie plus longue. Les cycles de déformation successifs du support n'influent pas sur les caractéristiques mécaniques du capteur, et celui-ci est insensible à la corrosion. En outre, il est particulièrement aisé de varier la forme et l'épaisseur du corps d'épreuve selon le type de jauge utilisé et la sensibilité recherchée.

D'une manière générale, en faisant varier la géométrie et les dimensions du corps d'épreuve, ainsi que la nature des jauges de contraintes et leur mode de montage électrique, on peut adapter le capteur en fonction d'applications très diverses faisant intervenir des efforts de torsion, flexion et.ou traction. Ceci se vérifie notamment pour celles qui demandent la mesure de contraintes multiples, auquel cas on équipe le capteur de quatre jauges de contrainte montées en rosette à 90 degrés comme décrit.

Un autre intérêt remarquable de l'invention réside dans le fait qu'elle permet de surveiller un support travaillant en compression et risquant de ce fait des ruptures par flambage. On fait alors avantageusement appel à une variante de réalisation du capteur qui est illustrée par les figures 4 et 5.

Les éléments du capteur qui ne sont pas modifiés par rapport aux figures déjà décrites portent les mêmes références. On y retrouve ainsi le corps d'épreuve en ses trois parties 21, 22 et 23, et les quatre pièces de structure accouplées 31-32 et 33-34. On a également fait apparaître sur la figure 4 le carter 55 de la masse d'enrobage, ainsi que la plaque 48 des cosses de relais.

La différence essentielle concerne la configuration de la partie centrale 21 du corps d'épreuve constituant la partie sensible du capteur. On constate en effet, qu'au lieu d'être entièrement dans un même plan, la lame métallique constituant le corps d'épreuve est déformée pour décrire une courbe suivant laquelle la partie sensible présente une flèche par rapport aux parties latérales 22 et 23. La valeur de la flèche est prédéterminée à une valeur qui dépend de l'application.

Dès lors, il devient possible de faire fonctionner les jauges de contrainte en flambage. Dans le cas illustré, la partie centrale 21 du corps d'épreuve porte quatre jauges de contrainte qui se répartissent entre ses deux faces opposées. Elles comprennent deux jauges 43 et 44 se situant symétriquement sur la face supérieure dans la disposition de la figure 4, et deux autres 45 et 46 se situant symétriquement sur la face inférieure.

On suppose également ici que ces quatre jauges sont montées suivant les quatre bras d'un pont de mesure de Wheatstone de telle sorte que leurs indications se cumulent arithmétiquement dans la fonction de sortie de celui-ci. La différence de potentiel résultante correspond à une sensibilité doublée quand l'effort mécanique concentré sur les deux axes des jauges (considérés perpendiculairement à la direction longitudinale du corps d'épreuve) se traduit en extension sur une face et en compression sur l'autre.

## Revendications

1. Capteur de détection des contraintes mécaniques dans un support, comportant une partie sensible portant au moins une jauge de contrainte, intégrée dans une structure de montage du capteur sur ledit support, caractérisé en ce que ladite structure comporte quatre pièces de structure massives (31 à 34) enserrant deux par deux solidement entre elles respectivement deux parties latérales d'un corps d'épreuve (20) dont une partie centrale comprise entre lesdites parties latérales (22, 23) constitue ladite partie sensible (21), lesdites parties latérales et lesdites pièces de structure formant ainsi un ensemble rigide de transmission des efforts mécaniques subis par le support vers ladite partie sensible.

2. Capteur suivant la revendication 1, caractérisé en ce que ladite partie sensible (21) est taillée et/ou conformée dans ledit corps d'épreuve (20), celui-ci étant constitué par une plaque d'épaisseur relativement faible en forme de lame allongée à faces opposées planes à surface lisse, avantageusement parallèles entre elles, et en ce que lesdites pièces de structure (31 à 34) sont constituées de blocs massifs d'épaisseur relativement importante présentant avantageusement des faces planes à surfaces lisses pour coopération par contact jointif avec celles des parties latérales (22, 23) dudit corps d'épreuve.

3. Capteur suivant la revendication 1 ou 2, caractérisé en ce que chacune desdites pièces de structure (31 à 34) est réalisée sous la forme d'un bloc parallélépipédique droit et solidarisée avec le corps d'épreuve (20), en contact mécanique intime avec les faces opposées correspondantes de ses parties latérales (22,23), par des moyens (36) de solidarisation mécanique en direction transversale aux surfaces coopérantes en contact, combinés avec une couche intermédiaire de collage entre ces dernières.

4. Capteur suivant l'une quelconque des revendications 1 à 3, caractérisé en ce que, au niveau des parties latérales (22-23) du corps d'épreuve enserrées entre les pièces de structure, l'ensemble est percé d'alésages (35) réalisés par avance, destinés au montage du capteur (10) sur ledit support (11) au moyen de vis ou boulons usuels (12-13).

5. Capteur suivant l'une quelconque des revendications 1 à 4, caractérisé en ce que la partie centrale du corps d'épreuve est enrobée dans une masse (51) de matière à comportement élastique qui protège les jauges de contrainte (41) des agressions extérieures sans perturber leur fonctionnement, et de préférence en ce que ladite masse d'enrobage (51) se prolonge en recouvrement d'une zone proximale desdites pièces de structure (31-34) et en ce qu'elle est elle-même entourée par une enveloppe de protection mécanique (52 ou 55).

6. Capteur suivant l'une quelconque des revendications 1 à 5, caractérisé en ce que ladite partie centrale du corps d'épreuve porte des jauges de contrainte disposées pour fonctionner complémentairement en traction dans deux directions perpendiculaires de son plan et détecter ainsi des contraintes résultant d'efforts de flexion, torsion et/ou traction subis par le support.

7. Capteur suivant l'une quelconque des revendications 1 à 6, caractérisé en ce que ladite partie centrale du corps d'épreuve présente au repos une flèche prédéterminée par rapport au plan de ses parties latérales et en ce qu'elle porte des jauges de contrainte disposées pour fonctionner en flambage pour détecter des contraintes apparaissant dans le support quand celui-ci travaille en compression.

8. Capteur suivant la revendication 7, caractérisé en ce que lesdites jauges de contrainte sont réparties entre les deux faces opposées de ladite partie centrale du corps d'épreuve pour fournir un signal cumulant leurs indications dans la fonction de sortie d'un pont de mesure de type Wheatstone.

9. Capteur suivant l'une quelconque des revendications 1 à 8, caractérisé en ce qu'il lui est associé des moyens de montage sur ledit support par l'intermédiaire d'organes d'assemblage à orientation libre se disposant symétriquement par rapport à ladite partie sensible du corps d'épreuve à travers lesdites pièces de structure.

10. Capteur suivant la revendication 9, caractérisé en ce que lesdits organes d'assemblage comportent des surfaces courbes complémentaires, en général sphériques, qui sont libres de glisser l'une sur l'autre, lesdites surfaces étant préférentiellement en répartition sur les deux faces opposées du corps d'épreuve.

11. Capteur suivant la revendication 10, caractérisé en ce que lesdites surfaces courbes complémentaires sont ménagées d'une part dans la masse de chaque pièce de structure autour d'un alésage de passage d'un organe de fixation du capteur au support et, d'autre part sur une rondelle s'interposant pressée contre elle par ledit organe de fixation.
